# EUROPEAN PATENT SPECIFICATION

(11) **EP 3 816 631 B1**
(45) Date of publication and mention of the grant of the patent: **13.03.2024**
(21) Application number: 19825262.9
(22) Date of filing: 13.05.2019
(51) Int. Cl.: B01F 31/87, B01F 31/80, G01N 35/00

(54) **CHEMICAL ANALYSIS DEVICE**
CHEMISCHE ANALYSEVORRICHTUNG
DISPOSITIF D'ANALYSE CHIMIQUE

(30) Priority: 29.06.2018 JP 2018123943
(43) Date of publication of application: 05.05.2021
(73) Proprietor: Hitachi High-Tech Corporation, Minato-ku Tokyo 105-6409 (JP)
(72) Inventor: KOURAI, Yuusuke, Tokyo 100-8280 (JP); SASAKI, Kota, Tokyo 100-8280 (JP); MAEDA, Jun, Tokyo 105-6409 (JP); YAMADA, Azusa, Tokyo 105-8717 (JP); ONO, Tetsuyoshi, Tokyo 105-6409 (JP)
(74) Representative: MERH-IP Matias Erny Reichl Hoffmann Patentanwälte PartG mbB
(86) International application number: PCT/JP2019/018864
(87) International publication number: WO 2020/003769

(56) References cited:
- WO-A1-2009/005066
- WO-A1-2009/005066
- WO-A1-2016/132798
- WO-A1-2016/132798
- JP-A- 2003 254 981
- JP-A- 2007 108 062

## Description

### Technical Field

The present invention relates to a chemical analysis device.

### Background Art

In the field of chemical/medical analysis, the amount of liquid such as a sample and a reagent has decreased. In this regard, as a technique for stirring and mixing a small amount of the sample and the reagent, PTL 1 describes a technique for irradiating an opening of a container with ultrasonic waves from the bottom of the container containing a sample and a reagent to stir and mix the sample and the reagent in a non-contact manner without using a spatula or a screw. A device according to such a technique is configured to emit the ultrasonic waves from the bottom of the container toward the opening of the container.

Further, PTL 1 also describes a technique for irradiating a container with ultrasonic waves from the bottom of the container and from the side of the container to stir and mix a sample and a reagent in a non-contact manner.

A device according to such a technique is configured to emit the ultrasonic waves from the bottom of the container and the side of the container toward the container.

Further, PTL 2 discloses a configuration in which driving power is supplied via a transformer, and a waveform applied to an ultrasonic wave generation source is detected. A device according to such a technique has a structure in which an applied waveform detection unit is provided in a stirring unit to perform control using the detected waveform and detect insufficient intensity of ultrasonic waves, whether or not ultrasonic waves are output when unnecessary, and whether a stirring state is good or bad.

Further, PTL 3 describes a technique for providing a sound source and a reflector outside a reaction container, arranging the reaction container between the sound source and the reflector, and intermittently emitting sound waves toward the reaction container from a plurality of directions to efficiently stir and mix a liquid in the reaction container. A device according to such a technique is configured to use an acoustic flow as a flow in which acoustic radiation pressure is dominant near a gas-liquid interface that is not affected by wall friction to generate a swirling flow (stirring flow) in a direction perpendicular to a water surface in the reaction container.

Further, PTL 4 describes a technique for immersing a sound wave generator in a sample to stir the sample and a reagent. PTL 4 also describes a technique for bringing a sound wave generator into contact with a reaction container to stir a sample and a reagent. Devices according to such techniques use the sound wave generator in which a comb-shaped electrode is formed on a piezoelectric substrate. Further, PTL 4 also describes a technique for applying a drive frequency, which is 1.5 to 2.5 times of a fundamental frequency f0 defined by a pitch of the comb-shaped electrode, to the comb-shaped electrode to utilize a harmonic frequency in order to improve the stirring performance.

Further, PTL 5 describes a configuration in which control is performed to drive only an electrode in the vicinity of a liquid surface such that ultrasonic waves pass the vicinity of the liquid surface based on information on the amount of a measurement sample and a reagent input to an operation unit, instead of driving all of a plurality of electrodes attached to a piezoelectric element. A device according to such a technique is configured such that a receiving element that receives ultrasonic waves is provided to determine a detected ultrasonic signal with a threshold, and perform feedback to adjust a condition. WO 2016/132798 A1 discloses a chemical analysis device according to the preamble of claim 1. It discloses an ultrasonic irradiation mechanism for irradiating a reagent or reaction solution with ultrasonic waves; degassing is performed in advance by irradiation with ultrasonic waves and is followed by mixing and photometry.

WO 2009/005066 A1 discloses a sound wave generation member, wherein the length L2 between interdigital electrodes at the opposite ends of a piezoelectric substrate is set shorter than twice the distance between the central position of a plurality of interdigital electrodes and the arrival position where an ultrasonic wave exiting from the central position of the plurality of interdigital electrodes toward the other surface of the piezoelectric substrate.

### Citation Lists

### Patent Literatures

PTL 1: JP H8-146007 A
PTL 2: JP 2003-254979 A
PTL 3: JP 2006-234839 A
PTL 4: JP 2009-2918 A
PTL 5: JP 2015-025678 A
PTL 6: WO 2016/132798 A1
PTL 7: WO 2009/005066 A1

### Summary of Invention

### Technical Problem

What is described in PTL 1 relates to the configuration in which sound wave is emitted from the bottom of the container toward the container opening or the configuration that further provides a mode of emitting sounds wave from the side of the container. If a strong sound wave is emitted from a sound wave supply means on the lower side in order to obtain a strong stirring force, there is a possibility that the liquid surface of the sample may rise so that the sample liquid or the like is scattered. On the other hand, if a sound wave that is too weak is applied, there is a possibility that the sound wave may not contribute to sufficient stirring. The height to emit these ultrasonic waves is set by switching a position of a combination of predetermined number of piezoelectric elements, but the accuracy in setting of the height is determined by the width of the piezoelectric element.

What is described in PTL 2 describes that a change of the magnitude of ultrasonic output is controlled by the electric impedance using the transformer. However, there is a description that a resonance point and an output voltage change if the number of loads of the ultrasonic elements to be driven is changed, and there is no solution for such a point.

What is described in PTL 3 can obtain the strong stirring force, and generates the stirring flow, which is the swirling flow in the direction perpendicular to the water surface, in the reaction container by utilizing the acoustic flow as the flow in which the acoustic radiation pressure is dominant near the gas-liquid interface that is not affected by wall friction. However, it is difficult to generate a sufficient swirling flow in the case of stirring a smaller amount of the sample and the reagent, and it is necessary to improve the performance of the stirring effect.

PTL 4 describes a stirring method of an automatic analysis device using the sound wave generator in which the comb-shaped electrode is formed on the piezoelectric substrate, but the sound wave generator is immersed in the sample, which may cause carryover to other samples. Alternatively, since the reaction container is in contact with the sound wave generator, the sound wave generators as many as the reaction containers are required, or the number of processes for bringing the sound wave generators into contact with the reaction containers increases, so that the throughput decreases. Furthermore, the method of using the harmonic by applying the drive frequency of 1.5 times to 2.5 times of the fundamental frequency f0 defined by the pitch of the comb-shaped electrode is described in order to improve the stirring performance, but no mention is made regarding a device configuration for changes in electrical impedance accompanying changes in frequency.

PTL 5 describes that irradiation conditions of ultrasonic waves are set by a memory based on a measurement sample to be stirred, a type and the amount of water or a reagent, and the viscosity, but no specific mention is made regarding determination on a combination of the number of piezoelectric elements and switching of the number of piezoelectric elements.

That is, conventional chemical analysis devices have a problem that it is difficult to obtain a sufficient swirling flow to improve the stirring performance at the time of stirring the sample and the reagent.

The present invention has been made to solve the above problems, and an object thereof is to provide a chemical analysis device with improved stirring performance of a sample and a reagent.

### Solution to Problem

The above cited problem is solved in accordance with the appended claims. In particular, the present invention is defined by a chemical analysis device with improved stirring performance of a sample and a reagent comprising: a plurality of ultrasonic elements; a waveform generator which generates an ultrasonic waveform; a determiner which determines positions and a number of ultrasonic elements to be driven from among the plurality of ultrasonic elements; a variable matching circuit which, based on a determination result, matches impedance between the waveform generator and each of the ultrasonic elements to be driven; and a switch which selects the ultrasonic elements to be driven from among the plurality of the ultrasonic elements.

### Advantageous Effects of Invention

According to the present invention, it is possible to provide the chemical analysis device with the improved stirring performance of the sample and the reagent.

### Brief Description of Drawings

[FIG. 1] FIG. 1 is a diagram illustrating an example of a configuration of a chemical analysis device according to the present embodiment.
[FIG. 2] FIG. 2 is a diagram illustrating an example of a configuration of a chemical analysis device according to a first embodiment.
[FIG. 3] FIG. 3 is a cross-sectional view illustrating an example of an ultrasonic stirring mechanism according to a comparative example.
[FIG. 4] FIG. 4 is a cross-sectional view illustrating an example of an ultrasonic stirring mechanism according to the first embodiment.
[FIG. 5] FIG. 5 is a diagram illustrating an example of a configuration of a chemical analysis device according to a second embodiment.

### Description of Embodiments

Hereinafter, a chemical analysis device according to an embodiment will be described. In addition, the drawings referred to in the following description only schematically illustrate embodiments of the present invention, and thus, dimensions, distances, and positional relationships of members may be exaggerated, or a portion of some members may be omitted in some cases. In addition, the dimensions and the distance of the members in a plan view and its corresponding cross-sectional view, for example, do not coincide in some cases. Further, in the following description, the same designations or the same reference signs denote the same or like members in principle, and detailed descriptions thereof will be appropriately omitted. Further, in the present specification, "upper", "lower", and the like indicate relative positions between constituent elements, and are not intended to indicate absolute positions.

### <<First Embodiment>>

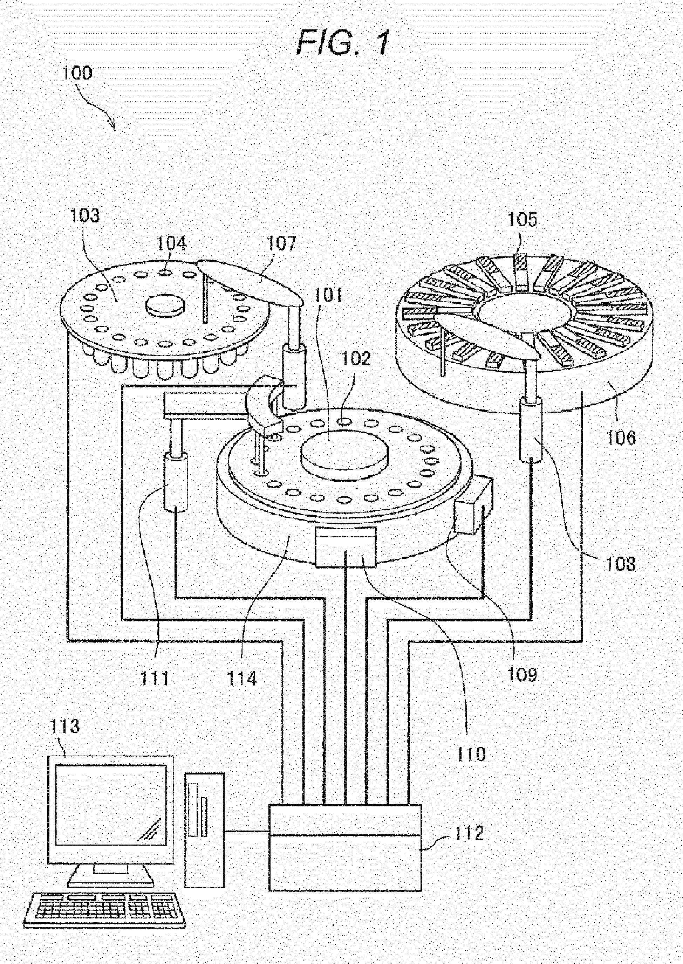

A configuration of a chemical analysis device 100 according to a first embodiment will be described with reference to FIGS. 1 to 4.

As illustrated in FIG. 1, the chemical analysis device 100 includes: a reaction disk 101 which stores a reaction container 102; a reaction container 102 into which a sample to be analyzed and a reagent are injected; a sample turntable 103 which houses a sample cup 104; a reagent turntable 106 which stores a reagent bottle 105; a sample dispensing mechanism 107 and a reagent dispensing mechanism 108 which dispense the sample and the reagent into the reaction container 102 respectively; a stirring mechanism 109 which is attached to a constant temperature bath 114 and stirs the dispensed sample and reagent in the reaction container 102; a photometric mechanism 110 which measures absorbance during a reaction process and after reaction of a mixed substance in the reaction container 102; a cleaning mechanism 111 which cleans the reaction container 102 after end of photometry for inspection; a controller 112 which creates a program or the like; a console 113 which sets information such as an analysis item and a liquid amount for analysis; the constant temperature bath 114 configured to keep a constant temperature state of the reaction container 102 stored in the reaction disk 101; and the like.

An operation of the chemical analysis device 100 will be briefly described. First, the sample is dispensed from the sample cup 104 into the reaction container 102 by the sample dispensing mechanism 107. Next, the turntable of the reaction disk 101 storing the reaction container 102 is rotated to a reagent dispensing position, and the reagent is dispensed from the reagent bottle 105 into the reaction container 102 by the reagent dispensing mechanism 108. Next, the turntable of the reaction disk 101 is rotated to an installation position of the stirring mechanism 109, and the sample and the reagent in the reaction container 102 are stirred and mixed. The measurement is started from the end of the stirring, and a mixture of the sample and the reagent in the reaction container 102 is sucked in the cleaning mechanism 111 to be subjected to cleaning at the end of the reaction. Under the control of the controller 112, such a series of processes is carried out in a batchwise manner for a plurality of samples. Incidentally, each of these components operates automatically according to the program created by the controller 112 based on the information set in advance by the console 113 before start of the inspection.

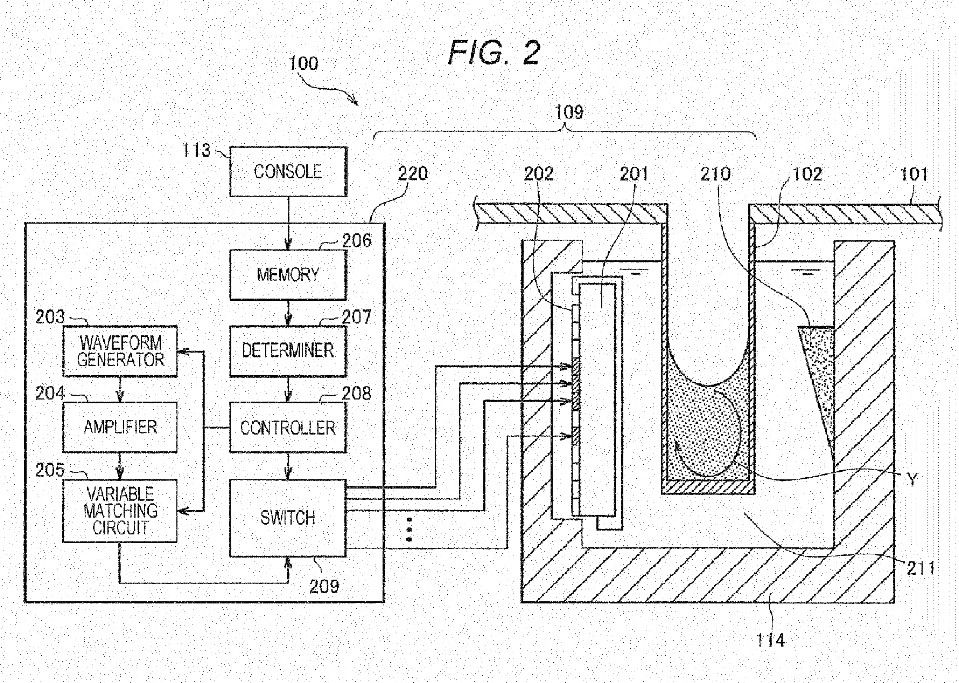

Next, a description will be given regarding a case where the stirring mechanism 109 provided in the chemical analysis device 100 according to the present embodiment stirs and mixes the sample and the reagent in a non-contact manner with respect to an object to be stirred. FIG. 2 is a diagram illustrating an example of a specific configuration of the stirring mechanism 109 provided in the chemical analysis device 100 illustrated in FIG. 1.

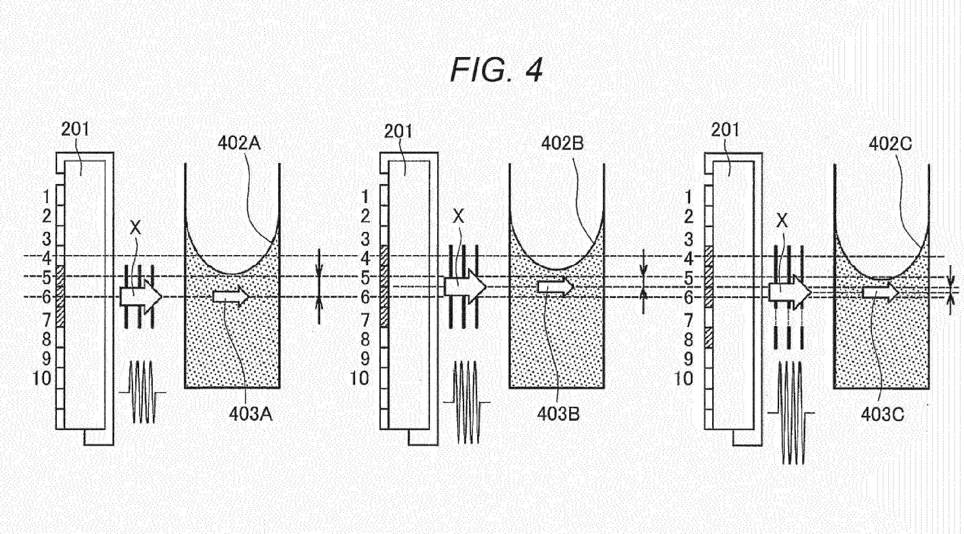

As illustrated in FIG. 2, the stirring mechanism 109 includes a piezoelectric element 201, a plurality of ultrasonic elements 202 (see FIG. 4, 202_1, 202_2,..., and 202_10), a reflection means 210, a drive device 220, and the like. The drive device 220 includes a waveform generator 203, an amplifier 204, a variable matching circuit 205, a memory 206, a determiner 207, a controller 208, a switch 209, and the like.

The piezoelectric element 201 is provided along an inner wall of the constant temperature bath 114 filled with constant temperature water 211 so as to face a side surface of the reaction container 102. The piezoelectric element 201 is provided along one inner wall of the constant temperature bath 114, and the reflection means 210 is provided along the other inner wall of the constant temperature bath 114. The reaction container 102 is arranged between the piezoelectric element 201 and the reflection means 210.

The piezoelectric element 201 includes a piezoelectric film and electrodes formed on both surfaces of the piezoelectric film. When a voltage is applied between both the electrodes, the piezoelectric film vibrates and an ultrasonic wave of a predetermined frequency is emitted from the piezoelectric element 201 to the side surface of the reaction container 102.

The ultrasonic wave generated on the side surface of the piezoelectric element 201 is reflected by the reflection means 210 and supplied to the reaction container 102.

The ultrasonic wave supplied to the reaction container 102 is emitted downward from the side surface of the reaction container 102 to stir a liquid such as the sample in the reaction container 102. As a result, the stirring mechanism 109 can stir the object to be stirred in the reaction container 102 in a non-contact manner.

A voltage having an amplitude-modulated waveform is applied to the piezoelectric element 201 from the drive device 220, and the side surface of the reaction container 102 is irradiated with the ultrasonic wave based on the voltage (change in amplitude).

The emitted ultrasonic wave propagates inside the constant temperature water 211 in the wall of the constant temperature bath 114, is transmitted to the reaction container 102, and enters the reaction container 102.

In general, when the ultrasonic wave propagating in the liquid reaches a free liquid surface, a force (caused mainly by acoustic radiation pressure) that causes the liquid to jump to a gas side acts. At this time, the voltage having the amplitude-modulated waveform is applied from the drive device 220 to the piezoelectric element 201 according to the chemical analysis device 100 of the present embodiment. Therefore, the ultrasonic wave emitted from the piezoelectric element 201 to the reaction container 102 also depends on the change in the amplitude.

Incidentally, the ultrasonic wave reflected by the reflection means 210 and incident on the reaction container 102 is set in a direction in which there is no liquid surface in its traveling direction.

The plurality of ultrasonic elements 202 have a structure in which segments are disposed in an array such that each ultrasonic element (202_1, 202_2,..., and 202_10) can be independently driven.

The waveform generator 203 generates an ultrasonic waveform based on information on the amount of liquid to be stirred in the reaction container 102 input from the controller 208 (that is, the amount of the dispensed sample and reagent) and the stirring timing and outputs the ultrasonic waveform to the amplifier 204.

The variable matching circuit 205 matches impedance between the waveform generator 203 and the ultrasonic element 202 to be driven based on the determination result.

The variable matching circuit 205 calculates a liquid surface height of a liquid to be measured charged in the reaction container 102 based on the information on the liquid amount, and determines the optimum ultrasonic wave irradiation region including the liquid surface.

The variable matching circuit 205 matches the impedance of the ultrasonic element 202 and the impedance of the drive device 220. As a result, the reflection power to the drive device 220 can be reduced, and the durability of the drive device 220 can be improved.

Sample information is input from the console 113. The sample information is information necessary to set stirring conditions, and examples thereof include information on the amount of the sample, information on the viscosity, and information on the amount of the reagent. The memory 206 stores correspondence information between the sample information and stirring information. The stirring information is information such as positions and the number of ultrasonic elements 202 to be driven during stirring.

Since the memory 206 is provided in this manner, it is possible to store the appropriate stirring conditions for the sample information.

The determiner 207 determines the positions and the number of the ultrasonic elements 202 to be driven based on the correspondence information stored in the memory 206 from among the plurality of ultrasonic elements 202 such that a propagation height of the ultrasonic wave is adjusted with a resolution equal to or lower than a height of the ultrasonic element 202. The determiner 207 outputs the determination result as transmission information to the controller 208.

When collating the memory 206 in this way, the determiner 207 can determine the stirring conditions without calculating the stirring conditions every determination.

The controller 208 generates a control signal based on the transmission information input from the determiner 207, and outputs the control signal to the waveform generator 203, the variable matching circuit 205, and the switch 209.

The switch 209 controls ON/OFF of the ultrasonic element 202 driven by the piezoelectric element 201 based on a control signal input from the controller 208.

The switch 209 selects the ultrasonic element 202 (the ultrasonic element 202 to be driven) corresponding to the ultrasonic wave irradiation region from among the plurality of ultrasonic elements 202. As a result, the predetermined ultrasonic element 202 is driven.

### <<Ultrasonic Stirring Principle>>

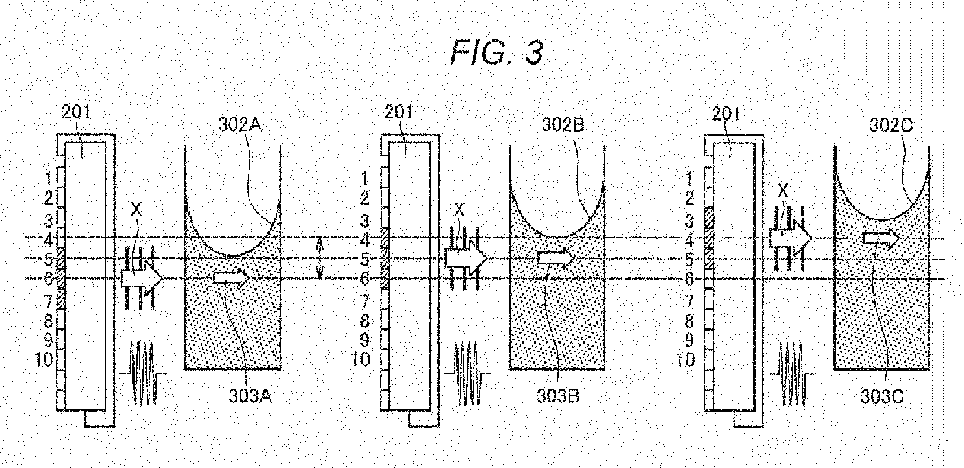

Next, an ultrasonic stirring principle will be briefly described with reference to FIGS. 3 and 4.

FIG. 3 is a cross-sectional view for describing an ultrasonic stirring principle according to a chemical analysis device of a comparative example, and FIG. 4 is a cross-sectional view for describing the ultrasonic stirring principle according to the chemical analysis device 100 of the present embodiment.

First, the ultrasonic stirring principle according to the chemical analysis device of the comparative example will be described.

In the comparative example, a combination of the plurality of ultrasonic elements 202 is selected such that an ultrasonic wave propagates to a gas-liquid interface of a sample. As the number of elements to be used, a fixed number of elements is selected such that energy transfer from a drive circuit to the group of used elements is constant. Therefore, the resolution of the height at which the ultrasonic wave propagates depends on the element width of the ultrasonic elements 202.

For example, as illustrated in the left view of FIG. 3, when a liquid amount of a sample 302A satisfies a predetermined amount, the chemical analysis device of the comparative example drives the ultrasonic elements 202_5, 202_6, and 202_7 in the piezoelectric element 201. In this case, an acoustic flow 303A generated by an ultrasonic waves X coincides with a position of a gas-liquid interface of the sample 302A. That is, the ultrasonic elements 202_5, 202_6, and 202_7 are controlled such that the acoustic flow 303A is generated at the position of the gas-liquid interface of the sample 302A.

For example, when the liquid amount of a sample 302B is larger than the liquid amount of the sample 302A as illustrated in the center view of FIG. 3, the chemical analysis device of the comparative example drives the ultrasonic elements 202_4, 202_5, and 202_6 in the piezoelectric element 201. In this case, an acoustic flow 303B generated by the ultrasonic wave X coincides with a position of a gas-liquid interface of the sample 302B. That is, the ultrasonic elements 202_4, 202_5, and 202_6 are controlled such that the acoustic flow 303B is generated at the position of the gas-liquid interface of the sample 302B.

For example, when the liquid amount of a sample 302C is larger than the liquid amount of the sample 302B as illustrated in the right side of FIG. 3, the chemical analysis device of the comparative example drives the ultrasonic elements 202_3, 202_4, and 202_5 in the piezoelectric element 201. In this case, an acoustic flow 303C generated by the ultrasonic wave X coincides with a position of a gas-liquid interface of the sample 302C. That is, the ultrasonic elements 202_3, 202_4, and 202_5 are controlled such that the acoustic flow 303C is generated at the position of the gas-liquid interface of the sample 302C.

That is, the chemical analysis device of the comparative example controls the positions at which the acoustic flows 303A to 303C are generated by the ultrasonic waves X by continuously driving the plurality of ultrasonic elements 202 by a predetermined number. That is, the chemical analysis device of the comparative example stabilizes the ultrasonic wave X to be generated by matching the impedance of the ultrasonic element 202 and the impedance of the drive device 220, and thus, only can make the number of ultrasonic elements 202 to be driven constant. Therefore, the sample and the reagent are stirred by a method of controlling a combination position of the fixed number of ultrasonic elements 202 in the chemical analysis device of the comparative example, and thus, there is a problem that it is difficult to control generation positions of the ultrasonic wave and the acoustic flow with a resolution equal to or lower than the height of the ultrasonic element 202.

Next, the ultrasonic stirring principle according to the chemical analysis device 100 of the present embodiment will be described. FIG. 4 is the cross-sectional view for describing the ultrasonic stirring principle of the chemical analysis device 100 of the present embodiment.

The chemical analysis device 100 of the present embodiment includes the determiner 207 and the variable matching circuit 205 in order to adjust the height at which the ultrasonic wave propagates with the resolution equal to or lower than the height of the ultrasonic element 202. The determiner 207 determines the number and positions of elements to be driven from among the plurality of ultrasonic elements 202, and the variable matching circuit 205 performs the impedance matching according to the determination result by the determiner 207.

For example, as illustrated in the left view of FIG. 4, when a liquid amount of a sample 402A satisfies a predetermined amount, the chemical analysis device 100 drives the ultrasonic elements 202_5, 202_6, and 202_7 in the piezoelectric element 201. In this case, an acoustic flow 403A generated by an ultrasonic waves X coincides with a position of a gas-liquid interface of the sample 402A. That is, the ultrasonic elements 202_5, 202_6, and 202_7 are controlled such that the acoustic flow 403A is generated at the position of the gas-liquid interface of the sample 402A.

For example, when the liquid amount of a sample 402B is slightly larger than the liquid amount of the sample 402A as illustrated in the center view of FIG. 4, the chemical analysis device 100 drives the ultrasonic elements 202_4, 202_5, 202_6, and 202_7 in the piezoelectric element 201. In this case, an acoustic flow 403B generated by the ultrasonic wave X coincides with a position of a gas-liquid interface of the sample 402B.

That is, it is understood that generation positions of the ultrasonic wave X and the acoustic flow 403B are controlled with the resolution equal to or lower than the height of the ultrasonic element 202, and a generation position of the acoustic flow 403B is closer to the position of the gas-liquid interface of the sample 402B from the center view of FIG. 4. In the center view of FIG. 4, it is understood that the generation positions of the ultrasonic wave X and the acoustic flow can be controlled with higher resolution than that in the left view of FIG. 4.

That is, the chemical analysis device 100 can arbitrarily match the impedance of the ultrasonic element 202 and the impedance of the drive device 220 to control driving of the ultrasonic elements 202_4, 202_5, 202_6, and 202_7.

For example, when the liquid amount of a sample 402C is slightly smaller than the liquid amount of the sample 402A as illustrated in the right view of FIG. 4, the chemical analysis device 100 drives the ultrasonic elements 202_4, 202_5, 202_6, and 202_8 in the piezoelectric element 201. In this case, an acoustic flow 403C generated by the ultrasonic wave X coincides with a position of a gas-liquid interface of the sample 402C.

That is, it is understood that generation positions of the ultrasonic wave X and the acoustic flow 403C are controlled with the resolution equal to or lower than the height of the ultrasonic element 202, and a generation position of the acoustic flow 403B is closer to the position of the gas-liquid interface of the sample 402B from the right view of FIG. 4. In FIG. 4(c), it is understood that the generation positions of the ultrasonic wave X and the acoustic flow can be controlled with higher resolution than that in the center view of FIG. 4.

That is, the chemical analysis device 100 can arbitrarily match the impedance of the ultrasonic element 202 and the impedance of the drive device 220 to control driving of the ultrasonic elements 202_4, 202_5, 202_6, and 202_8.

That is, the chemical analysis device 100 can control the position at which the acoustic flows 403A to 403C are generated by the ultrasonic waves X by intermittently driving the plurality of ultrasonic elements 202 by an arbitrary number. That is, the chemical analysis device 100 can select the positions and the number of the ultrasonic elements 202 to be driven every time by arbitrarily matching the impedance of the ultrasonic element 202 and the impedance of the drive device 220.

Therefore, the chemical analysis device 100 can stir the sample and the reagent by a method of arbitrarily controlling the positions and number of the ultrasonic elements 202 to be driven and control the generation positions of the ultrasonic wave and the acoustic flow with the resolution equal to or lower than the height of the ultrasonic element 202.

When the accuracy of setting of the height of the ultrasonic element 202 is set to be equal to or lower than the height of one ultrasonic element 202, it is possible to obtain a sufficient swirling flow to improve the stirring effect at the time of stirring the sample and the reagent.

According to the chemical analysis device 100 of the present embodiment, the determiner 207 determines the positions and the number of the ultrasonic elements 202 to be driven from among the plurality of ultrasonic elements 202, and the variable matching circuit 205 performs the impedance matching based on the determination result. As a result, the propagation height of the ultrasonic wave can be adjusted with the resolution equal to or lower than the height of the ultrasonic element 202. As a result, the ultrasonic wave and the acoustic flow can be stably generated, and thus, it is possible to realize the chemical analysis device 100 with improved stirring performance of the sample and the reagent.

### <<Second Embodiment>>

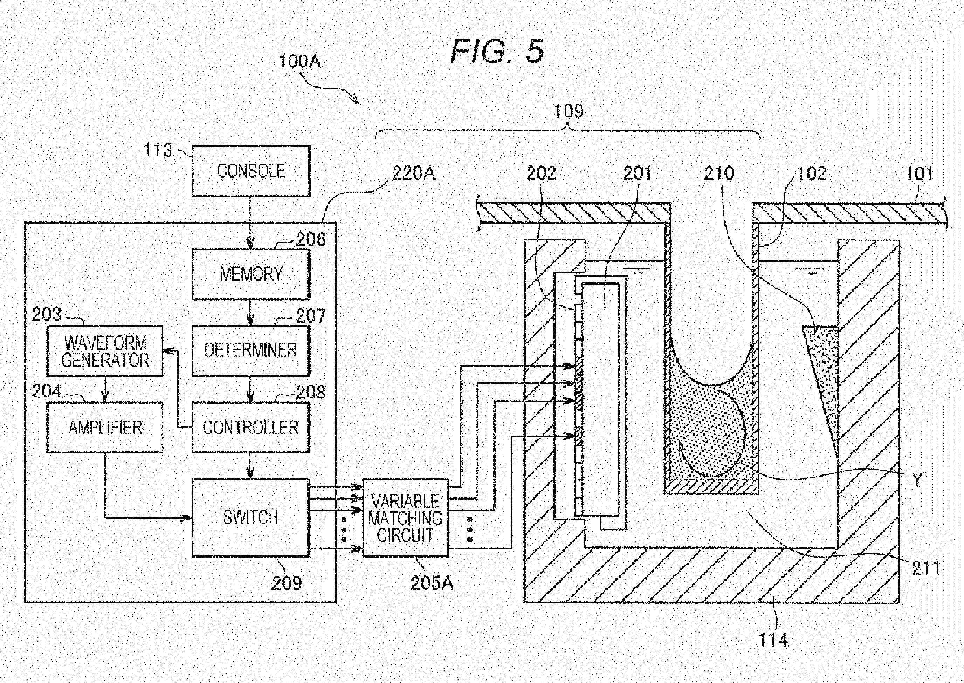

A configuration of a chemical analysis device 100A according to a second embodiment will be described with reference to FIG. 5.

The chemical analysis device 100 according to the first embodiment differs from the chemical analysis device 100A according to the second embodiment in terms that the variable matching circuit 205 is provided inside the drive device 220 in the chemical analysis device 100 according to the first embodiment, but a variable matching circuit 205A is provided outside the drive device 220 in the chemical analysis device 100A according to the second embodiment.

The variable matching circuit 205A is provided between the drive device 220 and the piezoelectric element 201. The variable matching circuit 205A matches the impedance of the drive device 220 and the impedance of the piezoelectric element 201. The variable matching circuit 205A obtains a control signal from the controller 208 based on information determined by the determiner 207 so as to obtain matching of the electric impedance at a drive frequency, and is set by a transmission signal from the controller 208.

The variable matching circuit 205A includes, for example, a variable resistor, a variable capacitor, a variable coil, and the like. The variable matching circuit 205A may be configured as a low-pass filter (LPF) type, a high-pass filter (HPF) type, a T type, a π type, or a combination thereof. Further, the variable matching circuit 205A may be a transformer type or transmission line type matching circuit.

Even when the variable matching circuit 205A is provided in an ultrasonic stirring mechanism as described above, a height at which an ultrasonic wave propagates and an acoustic flow is generated can be set closer to a liquid surface similarly to the first embodiment, and thus, it is possible to provide the chemical analysis device with improved stirring performance of a sample and a reagent.

Incidentally, the present invention is not limited to the above-described embodiments and modifications, and further includes various modifications within the scope of the appended claims.

### Reference Signs List

- 100: chemical analysis device
- 202: ultrasonic element
- 203: waveform generator
- 206: memory
- 205,205A: variable matching circuit
- 207: determiner
- 209: switch

## Claims

1. A chemical analysis device (100) with improved stirring performance of a sample and a reagent comprising:
a plurality of ultrasonic elements; and
a waveform generator which generates an ultrasonic waveform,
**characterized by**
a determiner (207) which determines positions and a number of ultrasonic elements to be driven from among the plurality of ultrasonic elements;
a variable matching circuit (205) which, based on a determination result, matches impedance between the waveform generator (203) and each of the ultrasonic elements to be driven; and
a switch (209) which selects the ultrasonic elements to be driven from among the plurality of the ultrasonic elements.

2. The chemical analysis device (100) according to claim 1, further comprising
a memory (206) that stores a reaction solution amount, viscosity information, positions of the ultrasonic elements to be driven, and a number of the ultrasonic elements to be driven.

3. The chemical analysis device (100) according to claim 2, wherein
the determiner (207) collates sample information and information stored in the memory (206) and determines the positions and the number of the ultrasonic elements to be driven from among the plurality of ultrasonic elements.

4. The chemical analysis device (100) according to claim 1, wherein
the variable matching circuit (205) matches the impedance based on drive frequencies of the plurality of ultrasonic elements.

5. The chemical analysis device (100) according to claim 1, wherein
the determiner (207) determines the positions and the number of the ultrasonic elements to be driven from among the plurality of ultrasonic elements such that a propagation height of an ultrasonic wave is adjusted with a resolution equal to or lower than a height of the ultrasonic element (202) .

## Patentansprüche

1. Vorrichtung (100) zur chemischen Analyse mit verbesserter Rührleistung einer Probe und eines Reagenzes, die Folgendes umfasst:
mehrere Ultraschallelemente; und
einen Wellenformgenerator, der eine Ultraschallwellenform erzeugt,
**gekennzeichnet durch**
eine Bestimmungsvorrichtung (207), die Positionen und eine Anzahl von Ultraschallelementen, die unter den mehreren Ultraschallelementen angesteuert werden sollen, bestimmt;
eine variable Anpassungsschaltung (205), die basierend auf einem Bestimmungsergebnis die Impedanz zwischen dem Wellenformgenerator (203) und jedem der anzutreibenden Ultraschallelemente anpasst; und
einen Schalter (209), der die Ultraschallelemente, die unter den mehreren Ultraschallelementen angesteuert werden sollen, auswählt.

2. Vorrichtung (100) zur chemischen Analyse nach Anspruch 1, die ferner Folgendes umfasst:
einen Speicher (206), der eine Reaktionslösungsmenge, Viskositätsinformationen, Position der anzutreibenden Ultraschallelemente und eine Zahl der anzutreibenden Ultraschallelemente speichert.

3. Vorrichtung (100) zur chemischen Analyse nach Anspruch 2, wobei
die Bestimmungsvorrichtung (207) Probeninformationen und Informationen, die in dem Speicher (206) gespeichert sind, sortiert und die Positionen und die Zahl der Ultraschallelemente, die unter den mehreren Ultraschallelementen angesteuert werden sollen, bestimmt.

4. Vorrichtung (100) zur chemischen Analyse nach Anspruch 1, wobei
die variable Anpassungsschaltung (205) die Impedanz basierend auf Antriebsfrequenzen der mehreren Ultraschallelemente anpasst.

5. Vorrichtung (100) zur chemischen Analyse nach Anspruch 1, wobei
die Bestimmungsvorrichtung (207) die Positionen und die Zahl der Ultraschallelemente, die unter den mehreren Ultraschallelementen angesteuert werden sollen, derart bestimmt, dass eine Ausbreitungshöhe der Ultraschallwelle mit einer Auflösung eingestellt wird, die kleiner oder gleich einer Höhe des Ultraschallelements (202) ist.

## Revendications

1. Dispositif d'analyse chimique (100) à performance d'agitation améliorée d'un échantillon et d'un réactif, comprenant :
une pluralité d'éléments à ultrasons ; et
un générateur de forme d'onde qui génère une forme d'onde à ultrasons,
**caractérisé par**
un moyen de détermination (207) qui détermine des positions et un nombre d'éléments à ultrasons devant être entraînés parmi la pluralité d'éléments à ultrasons ;
un circuit de mise en correspondance de variables (205) qui, sur la base d'un résultat de détermination, fait correspondre une impédance entre le générateur de forme d'onde (203) et chacun des éléments à ultrasons devant être entraînés ; et
un commutateur (209) qui sélectionne les éléments à ultrasons devant être entraînés parmi la pluralité d'éléments à ultrasons.

2. Dispositif d'analyse chimique (100) selon la revendication 1, comprenant en outre
une mémoire (206) qui stocke une quantité de solution de réaction, des informations de viscosité, des positions des éléments à ultrasons devant être entraînés, et un nombre des éléments à ultrasons devant être entraînés.

3. Dispositif d'analyse chimique (100) selon la revendication 2, dans lequel le moyen de détermination (207) collecte des informations d'échantillon et des informations stockées dans la mémoire (206) et détermine les positions et le nombre des éléments à ultrasons devant être entraînés parmi la pluralité d'éléments à ultrasons.

4. Dispositif d'analyse chimique (100) selon la revendication 1, dans lequel le circuit de mise en correspondance de variables (205) fait correspondre l'impédance sur la base de fréquences d'entraînement de la pluralité d'éléments à ultrasons.

5. Dispositif d'analyse chimique (100) selon la revendication 1, dans lequel le moyen de détermination (207) détermine les positions et le nombre des éléments à ultrasons devant être entraînés parmi la pluralité d'éléments à ultrasons de telle sorte qu'une hauteur de propagation d'une onde à ultrasons est ajustée avec une résolution égale ou inférieure à une hauteur de l'élément à ultrasons (202).
